# EUROPÄISCHE PATENTSCHRIFT

(11) **EP 2 028 079 B1**
(45) Veröffentlichungstag und Bekanntmachung des Hinweises auf die Patenterteilung: **17.03.2010**
(21) Anmeldenummer: 07016410.8
(22) Anmeldetag: 22.08.2007
(51) Int. Cl.: B62D 1/16, B60R 13/08

(54) **Abschirmelement und Abschirmanordnung**
Screening element and screening assembly
Elément de blindage et agencement de blindage

(43) Veröffentlichungstag der Anmeldung: 25.02.2009
(73) Patentinhaber: ElringKlinger Abschirmtechnik (Schweiz) AG, 9475 Sevelen SG (CH)
(72) Erfinder: Eisenring, Thomas, Dr., 9475 Sevex SG (CH); Olliges, Dieter, 9475 Sevex SG (CH)
(74) Vertreter: Bartels & Partner

(56) Entgegenhaltungen:
- DE-A1- 1 580 321
- JP-A- 59 050 861

## Beschreibung

Die vorliegende Erfindung betrifft ein Abschirmelement gemäss Anspruch 1 und eine Abschirmanordnung gemäss Anspruch 14.

Durch die DE 1 580 321 A1 ist eine Vorrichtung zum Durchführen der Lenksäule eines Kraftfahrzeuges und mehrerer neben der Lenksäule parallel zu dieser verlaufender Leitungen, Hüllrohre für Gestängeteile und dergleichen durch den Fahrzeugboden bekannt, wobei die Lenksäule und die daneben angeordneten Teile spielfrei durch Löcher einer Gummiplatte hindurchgeführt sind, die mit ihrem Rand sich zwischen zwei gemeinsam am Fahrzeugboden befestigten Blechen befindet. Mit der bekannten Lösung ist erreicht, dass die Lenksäule und die daneben angeordneten Teile gegen den Fahrzeugboden schwingungsisoliert sind und ferner ist verhindert, dass Zugluft, Nässe oder Schmutz an den Durchbrüchen für die Lenksäule und für die daneben angeordneten Teile in das Innere des Fahrerhauses gelangen können. Die genannten Bleche bilden Halteteile aus, so dass die dahingehenden Haltebleche und die Gummischeibe zum Einbau mit der Lenksäule und den daneben angeordneten Teilen eine Einheit bilden.

Durch die JP 59 050861 A ist gleichfalls ein Abschirmelement bekannt, bei dem eine trichterförmige Gummimanschette sich in der Art eines Faltenbalges ausgebildet zwischen einer glockenförmigen Metallabdeckhaube mit einer Aufnahmemöglichkeit für ein Lenkgestänge und einem gegenüberliegend angeordneten wannenartigen Aufnahmeteil erstreckt, bei dem in Verlängerung schräg geneigte Flanschteile in Anlage sind mit einem zugehörigen vorstehenden Ringflanschteil des insoweit elastisch nachgiebigen Faltenbalg-Abdeckteils. Neben einer mediendichten Abschirmung ist insoweit auch eine Schallabschirmung erreicht.

Ein gattungsgemässes trichterförmiges Abschirmelement zur Abschirmung gegen Schmutz, Flüssigkeiten, Hitze oder Kälte an der Durchführung einer Lenksäule vom Fahrgastraum in den Motorraum eines Kraftfahrzeuges ist aus DE 10 2006 002 992 bekannt. Dieses Abschirmelement besteht aus Aluminium und formt eine nicht geschlossene Kegelstumpfmantelfläche.

Es ist eine Aufgabe der vorliegenden Erfindung ein Abschirmelement zu schaffen, welches kostengünstig herzustellen und einfacher zu montieren ist. Gleichfalls ist es eine Aufgabe der vorliegenden Erfindung eine Abschirmanordnung bereitzustellen die eine vollständigere Abschirmung erlaubt.

Diese Aufgaben lösen ein Abschirmelement mit den Merkmalen des Anspruchs 1 und eine Abschirmanordnung mit den Merkmalen des Anspruchs 14.

Das erfindungsgemässe Abschirmelement weist ein rohrartiges Metallformteil, welches eine Längsachse definiert, auf. In einen ersten Endbereich des Metallformteils ist ein gummielastischer Innenring eingesetzt. Auf einen zweiten Endbereich des Metallformteils ist ein gummielastischer Aussenring mit einem ringförmigen Manschettenabschnitt aufgesetzt. Der Aussenring weist an seinem vom Metallformteil abgewandten Ende einen nach Aussen abstehenden Flanschabschnitt auf.

Bei der erfindungsgemässen Abschirmanordnung umgreift das erfindungsgemässe Abschirmelement eine Lenksäule, welche ein Karosserieblech eines Kraftfahrzeugs durchgreift. Dabei liegt der Innenring des Abschirmelementes an einem, an der Lenksäule gelagerten Lagerteil an. Ein Flanschabschnitt des Aussenrings greift in einem zugeordneten Aufnahmeraum am Karosserieblech ein.

Im Vergleich zum Stand der Technik benötigt ein erfindungsgemässes Abschirmelement ein kleineres Metallformteil, so dass Materialkosten eingespart werden können. Durch die Kombination des Metallformteils mit einem gummielastischen Innen- und Aussenring erhält das Abschirmelement die nötige Flexibilität, um im Kraftfahrzeug auftretende Schwingung zu dämpfen. Dadurch wird die Belastung des Metallformteils verringert und die Lebensdauer des Abschirmelementes erhöht. Des Weiteren lassen sich die gummielastischen Elemente einfach am Metallformteil anbringen und erlauben eine einfachere Montage des Abschirmelementes im Kraftfahrzeug. Die Abschirmanordnung erlaubt eine vollständigere Abschirmung gegenüber Schmutz und Hitze oder Kälte. Dadurch wird der Bereich hinter der Abschirmung besser geschützt, was zu weniger Verschleiss und Wartungsarbeiten führt.

Besonders bevorzugte Ausbildungsformen des Abschirmelementes und der Abschirmanordnung sind mit in den abhängigen Ansprüchen aufgeführten Merkmalen ausgestattet.

Im folgenden wird an Hand einer Zeichnung eine besonders bevorzugte Ausführungsform des erfindungsgemässen Abschirmelementes und der erfindungsgemässen Abschirmanordnung detailliert beschrieben.

Es zeigen rein schematisch:
- Fig. 1: eine perspektivische Draufsicht auf ein erfindungsgemässes Abschirmelement;
- Fig. 2: einen Schnitt durch das in Figur 1 gezeigte erfindungsgemässe Abschirmelement; und
- Fig. 3: einen Schnitt durch eine erfindungsgemässe Abschirmanordnung.

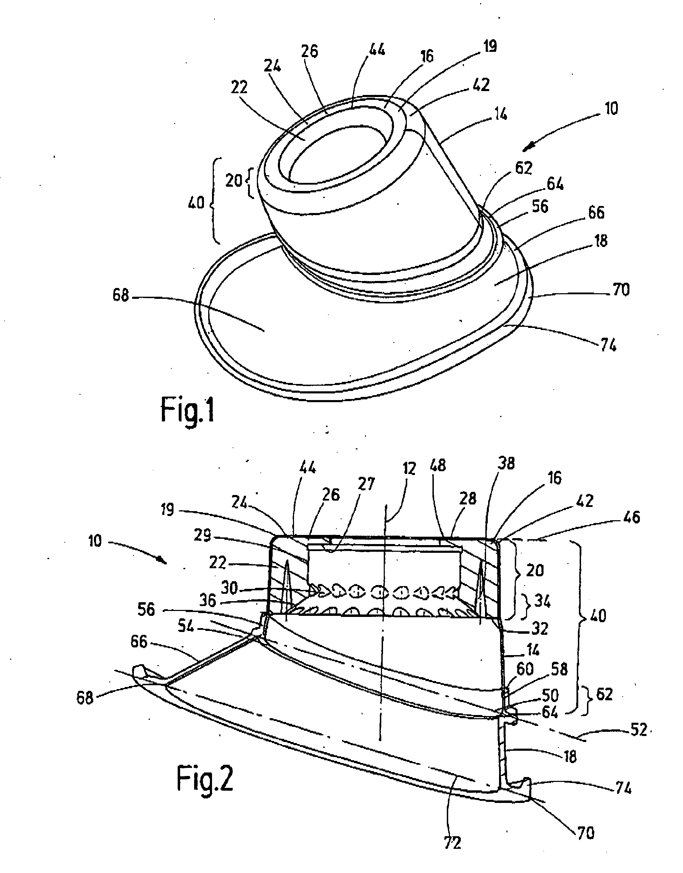

Die Figuren 1 und 2 zeigen eine Ausführungsform eines erfindungsgemässen Abschirmelementes 10. Das Abschirmelement 10 weist ein rohrartiges, eine Längsachse 12 definierendes Metallformteil 14 auf. In einem, einem ersten Ende 19 zugeordneten, ersten Endbereich 20 des Metallformteils 14 ist ein gummielastischen Innenring 16 unter Reibschluss eingesetzt.

Der Innenring 16 weist einen ringförmigen Körperteil 22 mit einem annähernd rechteckigen Querschnitt und einen ringscheibenförmigen Anschlagringteil 26 auf. Der Anschlagringteil 26 ist an einem zum ersten Ende 19 hingerichteten Ende 24 des Körperteils 22 angeordnet. Der Anschlagringteil 26 steht bezüglich des Körperteils 22 in Richtung Längsachse 12 nach innen radial vor. So wird eine im innern des Abschirmelementes 10 liegende Anschlagfläche 27. Die Anschlagfläche 27 ist vom ersten Ende 19 weggerichtet und liegt senkrecht zur Längsachse 12. Auf der zum Ersten Ende 19 hingerichteten Seite bildet der Anschlagringteil eine bezüglich des Körperteils 22 verbreiterte ersten Stirnfläche 28.

An der Innenmantelfläche 29 des ringförmigen Körperteils 22 sind umlaufend radial nach innen in Richtung zur Längsachse 12 hervorstehende Stütznoppen 30 ausgeformt. Von den Stütznoppen 30 an, nimmt der Innendurchmesser des Innenrings 16 bis zur zweiten Stirnfläche 32 des Innenrings 16 hin zu. Auf diese Weise wird eine konische Innenmantelfläche 36 eines Endabschnitts 34 des Innenrings 16 gebildet. Die konische Innenmantelfläche 36 erlaubt eine einfache Zentrierung des Abschirmelementes 10 währende der Montage. Von der Stirnfläche 32 in den Innenring 16 hinein verlaufende Ausnehmungen 38 reduzieren das Gewicht des Abschirmelementes 10. Die Ausnehmungen 38 sind in regelmässigen Abständen umlaufend angeordnet und als kegelförmige Sacklöcher ausgeformt.

Das rohrförmige Metallformteil 14 weist einen annähernd kreiszylinderförmigen Mantelabschnitt 40 auf. Am ersten Ende 19 des Metallformteils 14 ist ein ringscheibenförmiger Stirnwandteil 44 angeformt. Der Stirnwandteil 44 ist vom innenringseitigen Ende 42 des Mantelabschnitts 40 an nach innen zur Längsachse 12 hin geformt und liegt in einer gedachten zur Längsachse senkrechten ersten Ebene 46. Die Innenfläche 48 des Stirnwandteils 44 liegt an der vom Aussenring 18 abgewandten Stirnfläche 28 des Innenrings 16 an und bedeckt den Anschlagringteil 26 des Innenrings 16 nach innen hin bündig.

Das aussenringseitige Ende 50 des Metallformteils 14 liegt in einer gedachten zweiten Ebene 52, welche die Längsachse 12 schräg schneidet. An dem aussenringseitigen Ende 50 des Metallformteils 14 ist ein sich erweiternder nach aussen gerichteter Halteflansch 54 angeformt.

Der gummielastische Aussenring 18 weist einen auf das aussenringseitige Ende 50 des Metallformteils 14 aufgesetzten Manschettenabschnitt 56 auf. Die Innenfläche 58 des Manschettenabschnitts 56 liegt unter Reibschluss an der Aussenfläche 60 des aussenringseitigen zweiten Endbereichs 62 des Metallformteils 14 an. In der vom Metallformteil 14 abgewandten Richtung schliesst sich an den Manschettenabschnitt 56 des Aussenrings 18 innen eine umlaufende Haltenut 64 an. In die Haltenut 64 greift der Halteflansch 54 des Metallformteils 14 ein. Dadurch wird der Aussenring 18 am Metallformteil 14 zusätzlich gesichert.

Auf der vom Manschettenabschnitt 56 abgewandten Seite der Haltenut 64 formt der Aussenring 18 eine schiefe Kegelstumpfmantelfläche 66 aus, die sich asymmetrisch bezüglich der Längsachse 12 erweitert und in einen nach aussen gerichteten Flanschabschnitt 68 übergeht. Der Flanschabschnitt 68 bildet den vom Metallformteil 14 abgewandten Endbereich des Aussenrings 18.

Der Aussenrand 70 des Flanschabschnittes 68 liegt in einer gedachten, zur Längsachse 12 schiefen, dritten Ebene 72, welche annähernd parallel zur gedachten zweiten Ebene 52 verläuft. Der Aussenrand 70 des Flanschabschnitts 68 bildet ein Oval, welches bezüglich der Längsachse 12 exzentrisch angeordnet ist. An den Aussenrand 70 ist eine ringförmige Haltewulst 74 angeformt, welche in Richtung des Metallformteils 14 hoch steht.

Das Metallformteil 14 ist vorzugsweise aus Aluminium gefertigt und der gummielastische Innenring 16 und der gummielastische Aussenring 18 vorzugsweise aus Silikon, vorzugsweise aus hitzebeständigem Silikon.

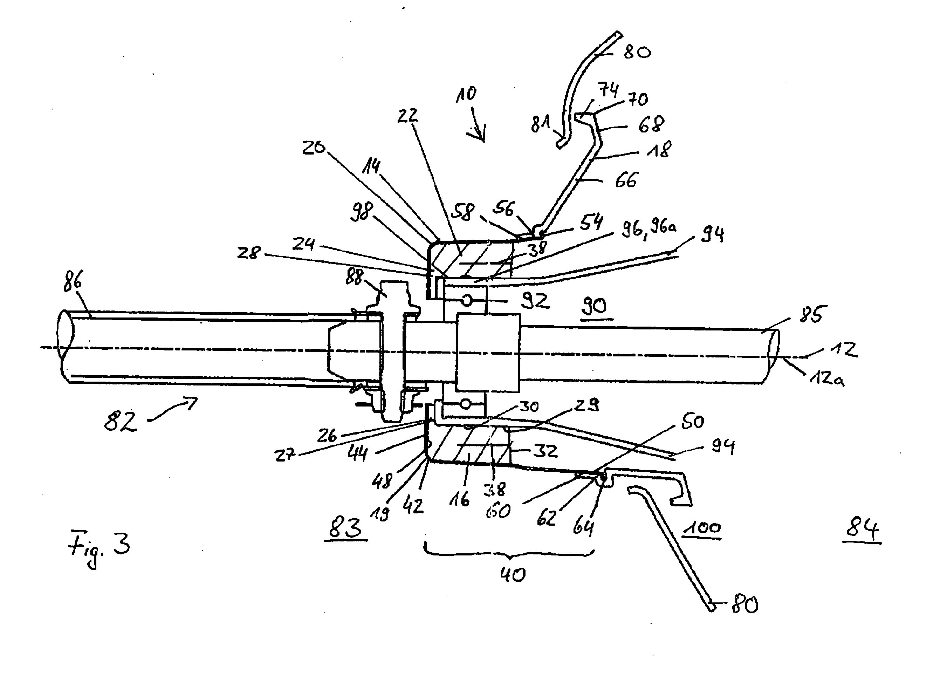

Fig. 3 zeigt einen Schnitt durch eine Abschirmanordnung in einem Kraftfahrzeug, wobei das Abschirmelement 10 zwischen einem Karosserieblech 80 und einer Lenksäule 82 angeordnet ist. Das Karosserieblech 80 trennt einen Motorraum 83 von einem Fahrgastraum 84. Das Abschirmelement 10 umgibt die Lenksäule 82, wobei sich die Längsachse 12 des Abschirmelementes 10 mit der Längsachse 12a der Lenksäule 82 überlagert.

Die Lenksäule 82 besteht aus einer hauptsächlich im Fahrgastraum 84 angeordneten, in den Motorraum hineinragenden Lenkwelle 85 und einem auf die Lenkwelle 85 aufgestecktem im Motorraum 83 angeordneten Lenkrohr 86. Die Verbindung zwischen Lenkwelle 85 und Lenkrohr 86 ist mit einer Schraube 88 gesichert. Die Lenksäule 82 ist durch eine Öffnung 90 im Karosserieblech geführt.

An der Gelenkwelle 85 ist über ein Lager 92 eine die Gelenkwelle 85 umschliessende Gelenkmanschette 94 angeordnet. Die Gelenkmanschette 94 ist mit einem in den Motorraum ragenden Endbereich 96a am Lager 92 befestigt. In der Figur ist nicht gezeigt, dass die Gelenkmanschette 94 mit dem Karosserieblech fest verbunden und somit gegenüber der Lenksäule 82 drehbar montiert.

Die Innenmantelfläche 29 des ringförmigen Körperteils 22, sowie die Stütznoppen 30 des Innenrings 16 und die Längsachsenanschlagfläche 27 des Anschlagringteils 26 des Innenrings 16 liegen an der Aussenfläche 98 an ohne eine relative Drehbewegung zwischen Abschirmelement 10 und Gelenkmanschette 94 zu verhindern. Der Endbereich 96a bildet so ein Lagerelement 96 für das Abschirmelement.

Der Flanschabschnitt 68 des Aussenrings 18 greift mit Spiel in einen Aufnahmeraum 100 des Karosserieblechs 80 ein. Der Randbereich 81 des Karosserieblechs 80 überdeckt, vom Motorraum 83 aus gesehen, den Haltewulst 74 und teilweise den Flanschbereich 68 des Aussenrings 18.

Das Abschirmelement steht vom Fahrgastraum 84 in den Motorraum 83 vor, wobei hauptsächlich das Metallformteil 14 die Hitze des Motorraums 83 gegenüber der Gelenkmanschette 94 und dem Fahrgastraum 84 abschirmt. Das Abschirmelement 10 deckt einen verbleibenden ringförmigen Teil der Öffnung 90 nahezu bis vollständig ab.

## Patentansprüche

1. Abschirmelement (10) mit einem rohrartigen, eine Längsachse (12) definierenden, Metallformteil (14), einem in einen ersten Endbereich (20) des Metallformteils (14) eingesetzten, gummielastischen Innenring (16) und einem gummielastischen Aussenring (18), der mit einem ringförmigen Manschettenabschnitt (56) auf einen zweiten Endbereich (62) des Metallformteils (14) aufgesetzt ist und an seinem vom Metallformteil (14) abgewandten Ende einen bezüglich der Längsachse (12) nach Aussen abstehenden Flanschabschnitt (68) aufweist, wobei das Abschirmelement (10) dazu bestimmt ist, eine ein Karosserieblech (80) eines Kraftfahrzeugs durchgreifende Lenksäule (82) zu umgreifen, mit dem Innenring (16) an einem an der Lenksäule (82) gelagerten Lagerteil (96) anzuliegen und mit dem Flanschabschnitt (68) in einem am Karosserieblech (80) zugeordneten Aufnahmeraum (100) einzugreifen.

2. Abschirmelement (10) nach Anspruch 1, **dadurch gekennzeichnet, dass** der Aussenrand (70) des Flanschabschnitts (68) wenigstens annähernd in einer zur Längsachse (12) schräg verlaufenden Ebene (72) liegt.

3. Abschirmelement (10) nach Anspruch 2, **dadurch gekennzeichnet, dass** das aussenringseitige Ende des Metallformteils (14) wenigstens annähernd in einer zur Längsachse (12) schräg, vorzugsweise zur Ebene (72) wenigstens annähernd parallel verlaufenden weiteren Ebene (52) liegt.

4. Abschirmelement (10) nach Anspruch 2 oder 3, **dadurch gekennzeichnet, dass** der Aussenrand (70) des Flanschabschnitts (68) unrund, vorzugsweise wenigstens annähernd oval ausgebildet ist und bezüglich der Längsachse (12) exentrisch verläuft.

5. Abschirmelement (10) nach einem der Ansprüche 2 bis 4, **dadurch gekennzeichnet, dass** am Flanschabschnitt (68) ein entlang dem Außenrand (70) verlaufender, ringförmiger Haltewulst (74) angeformt ist.

6. Abschirmelement (10) nach einem der Ansprüche 1 bis 5, **dadurch gekennzeichnet, dass** am Metallformteil (14), bei dessen aussenringseitigen Ende (50), ein bezüglich der Längsachse (12) nach aussen gerichteter Halteflansch (54) angeformt ist, welcher in eine am Manschettenabschnitt (56) angeformte Haltenut (64) eingreift.

7. Abschirmelement (10) nach einem der Ansprüche 1 bis 6, **dadurch gekennzeichnet, dass** das Metallformteil (14) einen zur Längsachse (12) mindestens annähernd koaxial verlaufenden, wenigstens annähernd kreiszylinderförmigen Mantelabschnitt (40) aufweist, welcher den ersten und den zweiten Endbereich umfasst.

8. Abschirmelement (10) nach einem der Ansprüche 1 bis 7, **dadurch gekennzeichnet, dass** am Metallformteil (14), bei dessen innenringseitigen Ende (42), ein nach innen gerichteter, ringscheibenförmiger Stirnwandteil (44) angeformt ist, welcher vorzugsweise in einer wenigstens annähernd zur Längsachse (12) rechtwinklig verlaufenden Ebene (46) liegt.

9. Abschirmelement (10) nach Anspruch 8, **dadurch gekennzeichnet, dass** der Innenring (16) unter Reibschluss in das Metallformteil (14) eingesetzt ist und am Stirnwandteil (44) anliegt.

10. Abschirmelement (10) nach einem der Ansprüche 1 bis 9, **dadurch gekennzeichnet, dass** der Innenring (16) einen ringförmige Körperteil (22) mit einem wenigstens annähernd rechteckigen Querschnitt und einen vom Körperteil (22), bezüglich der Längsachse (12) in Richtung nach innen und bei einem dem Aussenring (18) abgewandten Ende (24) abstehenden, ringscheibenförmigen Anschlagringteil (26) aufweist, welcher dazu bestimmt ist, am Lagerteil (96) axial anzuliegen und welcher gegebenenfalls andererseits am Stirnwandteil (44) anliegt.

11. Abschirmelement (10) nach einem der Ansprüche 1 bis 10, **dadurch gekennzeichnet, dass** der Innenring (16) eine bezüglich der Längsachse (12) radial innenliegende Mantelfläche (29) aufweist, aus welcher in Richtung zur Längsachse (12) Stütznoppen (30) vorstehen, welche dazu bestimmt sind, am Lagerteil (96) radial anzuliegen.

12. Abschirmelement (10) nach einem der Ansprüche 1 bis 11, **dadurch gekennzeichnet, dass** der Innenring (16) eine Stirnfläche (32) aufweist, von welcher sacklochartige Ausnehmungen (38) in den Innenring (16) hinein verlaufen.

13. Abschirmelement (10) nach einem der Ansprüche 1 bis 12, **dadurch gekennzeichnet, dass** das Metallformteil (14) aus Aluminium, und der Innenring (16) und / oder der Aussenring (18) vorzugsweise aus Silikon gefertigt sind.

14. Abschirmanordnung mit einem Abschirmelement (10) nach einem der Ansprüche 1 bis 13, welches eine ein Karosserieblech (80) eines Kraftfahrzeugs durchgreifende Lenksäule (82) umgreift, mit dem Innenring (16) an einem an der Lenksäule (82) gelagerten Lagerteil (96) anliegt und mit dem Flanschabschnitt (68) in einem am Karosserieblech (80) zugeordneten Aufnahmeraum (100) eingreift.

15. Abschirmanordnung nach Anspruch 14, **dadurch gekennzeichnet, dass** das Karosserieblech (80) einen Motorraum (83) von einem Fahrgastraum (84) trennt und das Abschirmelement (10) vom Karosserieblech (80) in Richtung zum Motorraum (83) vorsteht.

16. Abschirmanordnung nach Anspruch 14 oder 15,
**dadurch gekennzeichnet, dass** das Lagerelement (96) von einer an der Lenksäule (82) gelagerten Gelenkmanschette (94) gebildet ist.

## Claims

1. A screening element (10) having a tube-like metal moulded part (14) defining a longitudinal axis (12), a rubbery-elastic inner ring (16) inserted into a first end region (20) of the metal moulded part (14), and a rubbery-elastic outer ring (18) which is placed with an annular sleeve section (56) onto a second end region (62) of the metal moulded part (14), and on its end facing away from the metal moulded part (14) has a flange section (68) projecting outwardly in relation to the longitudinal axis (12), the screening element (10) being intended to encompass a steering column (82) passing through a body sheet (80) of a motor vehicle, to rest with the inner ring (16) against a mounting part (96) mounted on the steering column (82) and to engage with the flange section (68) in a retaining space (100) assigned to the body sheet (80).

2. The screening element (10) according to Claim 1, **characterised in that** the outer edge (70) of the flange section (68) lies at least approximately in a plane (72) extending at an angle to the longitudinal axis (12).

3. The screening element (10) according to Claim 2, **characterised in that** the end of the metal moulded part (14) on the outer ring side lies at least approximately in a further plane (52) extending at an angle to the longitudinal axis (12), preferably at least approximately parallel to the plane (72).

4. The screening element (10) according to Claim 2 or 3, **characterised in that** the outer edge (70) of the flange section (68) is non-circular, preferably at least approximately oval in form, and extends eccentrically in relation to the longitudinal axis (12).

5. The screening element (10) according to any of Claims 2 to 4, **characterised in that** an annular holding bead (74) extending along the outer edge (70) is moulded onto the flange section (68).

6. The screening element (10) according to any of Claims 1 to 5, **characterised in that** moulded onto the metal moulded part (14), on the outer ring side end (50) of the latter, there is a holding flange (54) aligned outwardly in relation to the longitudinal axis (12), and which engages in a holding groove (64) moulded onto the sleeve section (56).

7. The screening element (10) according to any of Claims 1 to 6, **characterised in that** the metal moulded part (14) has a coating section (40) at least approximately circular cylindrical in form extending at least approximately coaxially to the longitudinal axis (12) and which comprises the first and the second end region.

8. The screening element (10) according to any of Claims 1 to 7, **characterised in that** moulded onto the metal moulded part (14), on the inner ring side end (42) of the latter, there is an inwardly aligned, annular disc-shaped face wall part (44) which preferably lies in a plane (46) extending at least approximately at right angles to the longitudinal axis (12).

9. The screening element (10) according to Claim 8, **characterised in that** the inner ring (16) is inserted into the metal moulded part (14) with friction fit, and rests against the face wall part (14).

10. The screening element (10) according to any of Claims 1 to 9, **characterised in that** the inner ring (16) has an annular body part (22) with an at least approximately rectangular cross-section and an annular disc-shaped stop ring part (26) projecting inwardly from the body part (22) in relation to the longitudinal axis (12) and at an end (24) facing away from the outer ring (18), which is intended to rest against the mounting part (96) axially, and which optionally otherwise rests against the face wall part (44).

11. The screening element (10) according to any of Claims 1 to 10, **characterised in that** the inner ring (16) has a coating surface (29) lying radially to the inside in relation to the longitudinal axis (12), from which support studs (30), which are intended to rest against the mounting part (96) radially, project towards the longitudinal axis (12).

12. The screening element (10) according to any of Claims 1 to 11, **characterised in that** the inner ring (16) has a face surface (32) from which blind hole-type recesses (38) extend into the inner ring (16).

13. The screening element (10) according to any of Claims 1 to 12, **characterised in that** the metal moulded part (14) is made of aluminium, and the inner ring (16) and/or the outer ring (18) is preferably made of silicone.

14. A screening system having a screening element (10) according to any of Claims 1 to 13, which encompasses a steering column (82) passing through a body sheet (80) of a motor vehicle, rests with the inner ring (16) against a mounting part (96) mounted on the steering column (82), and with the flange section (68) engages in a retaining space (100) assigned to the body sheet (80).

15. The screening system according to Claim 14, **characterised in that** the body sheet (80) separates an engine space (83) from a passenger space (84), and the screening element (10) projects from the body sheet (80) towards the engine space (83).

16. The screening system according to Claim 14 or 15, **characterised in that** the mounting element (96) is formed by an articulated sleeve (94) mounted on the steering column (82).

## Revendications

1. Elément (10) de protection comprenant une pièce (14) métallique façonnée, tubulaire et définissant un axe (12) longitudinal, un anneau (16) intérieur ayant l'élasticité du caoutchouc et inséré dans une première partie (20) d'extrémité de la pièce (14) métallique façonnée et un anneau (18) extérieur ayant l'élasticité du caoutchouc, qui est enfilé par une section (56) annulaire de manchette sur une deuxième partie (62) d'extrémité de la pièce (14) métallique façonnée et qui a, à son extrémité éloignée de la pièce (14) métallique façonnée, une section (68) de bride en saillie vers l'extérieur par rapport à l'axe (12) longitudinal, l'élément (10) de protection étant destiné à entourer une tôle (80) de carrosserie d'une colonne (82) de direction traversant un véhicule automobile, l'anneau (16) intérieur s'appliquant sur une partie (96) de palier monté sur la colonne (82) de direction et pénétrant par la section (68) de bride dans un espace (100) de réception associé à la tôle (80) de carrosserie.

2. Elément (10) de protection suivant la revendication 1, **caractérisé en ce que** le bord (70) extérieur de la section (68) de bride se trouve au moins à peu près dans un plan (72) s'étendant de manière inclinée par rapport à l'axe (12) longitudinal.

3. Elément (10) de protection suivant la revendication 2, **caractérisé en ce que** l'extrémité se trouvant du côté de l'anneau extérieur de la pièce (14) métallique façonnée a au moins un autre plan (52) incliné par rapport à l'axe (12) longitudinal, s'étendant de préférence au moins à peu près parallèlement au plan (72).

4. Elément (10) de protection suivant la revendication 2 ou 3, **caractérisé en ce que** le bord (70) extérieur de la section (68) de bride n'est pas circulaire, en étant constitué de préférence au moins à peu près de manière ovale et s'étend de manière excentrée par rapport à l'axe (12) longitudinal.

5. Elément (10) de protection suivant l'une des revendications 2 à 4, **caractérisé en ce que** sur la section (68) de bride est formé, un bourrelet (74) de maintien, annulaire et s'étendant le long du bord (70) extérieur.

6. Elément (10) de protection suivant l'une des revendications 1 à 5, **caractérisé en ce que** sur la pièce (14) métallique façonnée, à son extrémité (50) du côté de l'anneau extérieur, est formée une bride (54) de maintien, qui est dirigée vers l'extérieur par rapport à l'axe (12) longitudinal et qui pénètre dans une rainure (64) de maintien formée sur la section (56) de manchette.

7. Elément (10) de protection suivant l'une des revendications 1 à 6, **caractérisé en ce que** la pièce (14) métallique façonnée a une section (40) de surface latérale, à peu près au moins en forme de cylindre circulaire, s'étendant au moins approximativement coaxialement à l'axe (12) longitudinal et comprenant la première et la deuxième parties d'extrémité.

8. Elément (10) de protection suivant l'une des revendications 1 à 7, **caractérisé en ce que** sur la pièce (14) métallique façonnée, à son extrémité (42) du côté de l'anneau intérieur est formée une partie (44) de paroi frontale en forme de disque annulaire, qui est dirigée vers l'intérieur et qui se trouve de préférence dans un plan (46) s'étendant au moins à peu près perpendiculairement à l'axe (12) longitudinal.

9. Elément (10) de protection suivant la revendication 8, **caractérisé en ce que** l'anneau (16) intérieur est inséré à frottement dans la pièce (14) métallique façonnée et s'applique à la partie (44) de paroi frontale.

10. Elément (10) de protection suivant l'une des revendications 1 à 9, **caractérisé en ce que** l'anneau (16) intérieur a une partie (22) de corps annulaire ayant une section transversale au moins à peu près rectangulaire et une partie (26) annulaire de butée, en forme de disque annulaire, en saillie de la partie (22) de corps par rapport à l'axe (12) longitudinal dans la direction vers l'intérieur et pour une extrémité (24) éloignée de l'anneau (18) extérieur, partie (26) qui est destinée à s'appliquer sur la partie (96) de palier axialement et qui s'applique, le cas échéant, d'autre part, à la partie (44) de paroi frontale.

11. Elément (10) de protection suivant l'une des revendications 1 à 10, **caractérisé en ce que** l'anneau (16) intérieur a une surface (29) latérale intérieure radialement par rapport à l'axe (12) longitudinal, à partir de laquelle font saillie dans la direction de l'axe (12) longitudinal des bossages (30) d'appui, qui sont destinés à s'appliquer radialement à la partie (96) de palier.

12. Elément (10) de protection suivant l'une des revendications 1 à 11, **caractérisé en ce que** l'anneau (16) intérieur a une surface (32) frontale à partir de laquelle s'étendent des évidement (38) en forme de trou borgne dans l'anneau (16) intérieur.

13. Elément (10) de protection suivant l'une des revendications 1 à 12, **caractérisé en ce que** la pièce (14) métallique façonnée est en aluminium et l'anneau (16) intérieur et/ou l'anneau (18) extérieur sont de préférence en silicone.

14. Agencement de protection ayant un élément (10) de protection suivant l'une des revendications 1 à 13, qui entoure une colonne (82) de direction traversant une tôle (80) de carrosserie d'un véhicule automobile, qui s'applique par l'anneau (18) intérieur sur une partie (96) de palier montée sur la colonne (82) de direction et qui pénètre par la section (68) de bride dans un espace (100) de réception associé à la tôle (80) de carrosserie.

15. Agencement de protection suivant la revendication 14, **caractérisé en ce que** la tôle (80) de carrosserie sépare un espace (83) moteur d'un espace (84) réservé aux passagers et l'élément (10) de protection est en saillie de la tôle (80) de carrosserie dans la direction de l'espace (83) moteur.

16. Agencement de protection suivant la revendication 14 ou 15, **caractérisé en ce que** l'élément (96) de palier est formé par une manchette (94) d'articulation montée sur la colonne (82) de direction.
